(19) Europäisches Patentamt
European Patent Office
Office européen des brevets

(11) **EP 1 731 220 B1**

(12) **EUROPÄISCHE PATENTSCHRIFT**

(45) Veröffentlichungstag und Bekanntmachung des Hinweises auf die Patenterteilung:
**06.08.2008 Patentblatt 2008/32**

(51) Int Cl.:
**B01J 19/30** (2006.01)  **B01J 19/32** (2006.01)
**B21D 28/10** (2006.01)

(21) Anmeldenummer: **05012321.5**

(22) Anmeldetag: **08.06.2005**

(54) **Verfahren zur Herstellung eines Füllkörpers für den Stoff- und Wärmeaustausch sowie nach dem Verfahren hergestellter Füllkörper**

Method for manufacturing a random packing for mass and heat exchange and random packing manufactured by this method

Procédé de fabrication d'un élément de garnissage pour l'utilisation dans un appareil échangeur de masse et de chaleur et élément de garnissage obtenu par un tel procédé

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**13.12.2006 Patentblatt 2006/50**

(73) Patentinhaber: **Vereinigte Füllkörper-Fabriken GmbH & Co. KG**
**56235 Ransbach-Baumbach (DE)**

(72) Erfinder: **Schwämmlein, Kurt**
**55545 Bad Kreuznach (DE)**

(74) Vertreter: **Quermann, Helmut et al**
**Patentanwälte**
**Quermann Sturm**
**Unter den Eichen 7**
**65195 Wiesbaden (DE)**

(56) Entgegenhaltungen:
**EP-B- 0 764 462         US-A- 4 105 724**
**US-A- 4 575 435         US-A- 5 411 681**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft ein Verfahren zur Herstellung eines Füllkörpers für den Stoff- und Wärmeaustausch. Sie betrifft ferner einen nach dem Verfahren hergestellten Füllkörper.

Es ist bekannt, dass Füllkörper verschiedener Ausführungsformen als regellose Schüttungen in Kolonnen, Reaktoren und anderen Behältern für den Stoff- und Wärmeaustausch vielfach eingesetzt werden, wobei thermische, chemische oder physikalische Verfahren wie Absorption, Desorption, Rektifikation, Extraktion und andere Trennprozesse betrieben werden, bei denen verschiedene Phasen bzw. Medien, zum Beispiel gasförmig/flüssig, mit möglichst geringem Aufwand effektiv und innig miteinander in Kontakt gebracht werden sollen. Die Füllkörper vergrößern die Oberfläche in dem von ihnen ausgefüllten Volumen und intensivieren dadurch den Stoff- bzw. Wärmeaustausch zwischen den verschiedenen Phasen bzw. Medien innerhalb dieses Volumens. Die Phasengrenzfläche für den Stoffübergang stimmt in der Regel nicht exakt mit der geometrischen Füllkörperoberfläche überein, sondern ist vielmehr die Summe aus der während des Prozesses benetzten Füllkörperoberfläche und der Oberflächensumme aller sich im Füllkörperbett bildenden Tropfen. Der Umfang der Benetzung der Füllkörperoberfläche hängt u.a. von den Flüssigkeitseigenschaften, den Füllkörpermaterialeigenschaften, der Berieselungsdichte und von weiteren Faktoren ab. Je größer die Phasengrenzfläche ist, desto größer ist - unter sonst gleichen Bedingungen - der Stoff- bzw. Wärmeaustausch. Das Füllkörperbett weist gegenüber der Strömung der Phasen einen bestimmten Druckverlust auf, der vom Gasbelastungsfaktor, der Berieselungsdichte, dem Füllkörpertyp, der Füllkörpergröße und weiteren Parametern abhängt. Wünschenswert ist ein möglichst hoher Stoff- bzw. Wärmeaustausch in einem möglichst kleinen Volumen unter möglichst geringem Druckverlust.

Bekannt ist weiterhin, dass der Übergang von einem Füllkörper mit geschlossener Oberfläche auf einen Füllkörper, dessen Oberfläche im weitesten Sinne Öffnungen bzw. Durchbrüche aufweist, zu deutlichen Verbesserungen hinsichtlich der Senkung des Druckverlustes über die Füllkörperschüttung führt. Bei geeigneter Form ergeben sich dabei keine nennenswerten Leistungsminderungen bezüglich Stoff- bzw. Wärmeaustausch. Allerdings muss bei manchen Ausführungsformen bzw. in manchen Fällen besonders auf eine gute bzw. gleichmäßige Vorverteilung der Medien - in der Regel der Flüssigkeit - durch Auswahl eines geeigneten Flüssigkeitsverteilers - zum Beispiel mit einer geeigneten Anzahl und Verteilung von Tropfstellen - geachtet werden, insbesondere wenn es sich um größere Kolonnendurchmesser handelt.

In einer regellosen Schüttung werden die Füllkörper und deren meist mit einer gedachten Vorzugsrichtung parallel verlaufenden Füllkörperachsen nach einer technischen Befüllung in der Praxis nahezu regellos nach dem Zufallsprinzip über alle möglichen Ausrichtungen in Bezug zu der Kolonnenachse bzw. Behälterachse verteilt sein, sofern die Füllkörper nicht extrem flach sind und das Nennmaß des betreffenden Füllkörpers entsprechend klein gegenüber dem Kolonnendurchmesser ist. Eine signifikante Bevorzugung der parallelen oder quasi-parallelen Ausrichtung der Füllkörperachse in Bezug zu der Kolonnenachse - welches einer strömungsgünstigen Ausrichtung gegenüber einer regellosen Anordnung entspricht - tritt unter einem praktisch vertretbaren Befüllungsvorgang zumeist nicht in einem ausreichend nennenswertem Umfange auf.

In diesem Zusammenhang ist eine Vielzahl von im weitesten Sinne aus Streifen aufgebauter Füllkörper bekannt. Diese sind beispielsweise beschrieben in DE-PS 853 159, EP 0 143 902 A1, US 4 575 435, DE-AS 1 129 931, US 4 303 599, DE 295 12 080 U1, EP 0 764 462 B1. US 4 041 113, US 4 576 763, US 5 411 681 und EP 0 697 246 B1. In sinnfälliger Weise lässt sich bei diesen bekannten Ausführungsformen im weitesten Sinne eine Füllkörperachse so definieren, wobei diese senkrecht zu den Normalen auf dem bestimmenden Hauptteil der wesentlichen Oberflächenelemente dieser bekannten Füllkörper steht. Diese wesentlichen Oberflächenelemente können gedanklich als Streifen aufgefasst werden, die im Falle von zum Beispiel Metall als Füllkörperwerkstoff aus einem ehemals ebenen rechteckigen Blechstück mit geeigneten Einschnitten durch Umformvorgänge hervorgegangen sind. Die Streifen haben bekanntlich zwei aufeinander senkrecht stehende Seiten und können entlang ihrer einen Seite - zumeist längsseitig - gebogen bzw. verschiedenartig gekrümmt sein, während die andere Seite - also die zur ersteren senkrecht stehende Seite - immer ein gerades Stück ist bzw. ein gerades Stück mit einer kleinen Nut oder mit einer dazu rechtwinkligen Ansatzfläche wie eine Art Flanschstück jeweils zur mechanischen Verstärkung ist.

Ein weiterer Füllkörper ist aus der WO 02/40148 A2 bekannt. Dieser weist eine polygone Gestalt auf und besitzt mehrere gebogene Streifen.

In "Chem Technol Biotechnol 78:142-145 (online:2003), www.paper.edu.cn" ist unter dem Titel "Intensification of random packing via CFD simulation, PIV measurement and traditional experiments" ein Füllkörper beschrieben, mit einem geringen Höhen-Durchmesserverhältnis von 0,2 - 0,3. Durch diesen soll erreicht werden, dass die meisten sogenannten Miniringe sich von alleine unter einem Winkel von weniger als 30° zur Horizontalen anordnen, wenn sie in Kolonnen geschüttet werden.

In der DE 197 15 704 C2 ist ein Füllkörper beschrieben, bei dem der Durchmesser des Füllkörpers größer als dessen Höhe ist, wobei das Verhältnis von Höhe zu dem Durchmesser vorzugsweise 1:2 beträgt.

Eine Vielzahl der aus dem vorgenannten Stand der Technik bekannten Füllkörper, die aus Metall bestehen, wird aus einem Band hergestellt. Es wird das Band geschnitten, sodass sich ein Blech mit einer bestimmten Länge, Breite und Wandstärke ergibt. Dann werden Einschnitte in das Blech eingebracht, zur Bildung von Streifenabschnitten. Diese Einschnitte sind jeweils im Bereich deren beiden Enden geschlossen. Zwischen benachbarten, derart eingebrachten Einschnitten lässt sich jeweils ein Streifenabschnitt in Bogenform formen. Das derart umgeformte Band wird dann in die gewünschte Form gebracht, sei es, wie bei der US 4 576 763 in eine im Wesentlichen halbkreisförmige Form, mit den hiervon ausgehenden Ausbuchtungen, eine längliche Form gemäß der EP 0 764 462 B1 mit den hiervon ausgehenden Ausbuchtungen, eine zylindrische Form gemäß der US 4 576 763 mit den hiervon ausgehenden Ausbuchtungen. Bei all diesen Füllkörpern ist die Form des Füllkörpers stark an die Vorgabe der Geometrie des Bleches gebunden. Es ist demzufolge nicht möglich Füllkörper herzustellen, die grundsätzlich von der Grundform des Blechs abweichen, sofern man von der Möglichkeit der Formung der diversen Bogen absieht. Auf Grund dieser grundsätzlichen gestalterischen Vorgabe besteht keine Möglichkeit, einen Füllkörper herzustellen, der ein geringes Verhältnis der Höhe des Füllkörpers zu seinem formalen Füllkörperdurchmesser aufweist. Ein solches Verhältnis ist von besonderer Bedeutung für eine bevorzugte Ausrichtung des Füllkörpers, bei einer technischen Kolonnenbefüllung.

Aufgabe der vorliegenden Erfindung ist es, ein Verfahren zur kostengünstigen Herstellung eines Füllkörpers anzugeben, das es ermöglicht, einen Füllkörper zu schaffen, der, unabhängig von der Form der Bogen weitgehend beliebig unter dem Aspekt des Verhältnisses von Höhe und formalem Durchmesser des Füllkörpers gestaltet werden kann und somit die Vorraussetzung für eine bevorzugte Ausrichtung der Füllkörper in einer technischen Kolonnenbefüllung schafft. Aufgabe der vorliegenden Erfindung ist es ferner, zu einem kostengünstig herstellbaren Füllkörper mit geringem Druckverlust und mit ausreichenden Flüssigkeitsquerverteileigenschaften - jeweils über das ganze Füllkörperbett betrachtet - zugelangen, indem sich dieser Typ Füllkörper bei einer technischen Kolonnenbefüllung so bevorzugt ausrichtet, dass einerseits ein außergewöhnlich niedriger Druckverlust, und andererseits eine ausreichende Raumerfüllung mit benetzbarer Füllkörperoberfläche resultiert.

Gelöst wird die Aufgabe zunächst durch ein Verfahren zur Herstellung eines Füllkörpers mit folgenden Schritten:

a. Schneiden eines Bandes aus Metall, sodass sich ein Blech mit einer bestimmten Länge, Breite und Wandstärke ergibt,
b. Einbringen von Einschnitten in das Blech zur Bildung von Streifenabschnitten,
c. Einbringen von mindestens einem Einschnitt in das Blech, wobei dieser Einschnitt an einem Ende offen ist, zur Bildung von Blechabschnitten,
d. Formung von Streifenabschnitten in Bogenform,
e. Formen der Blechabschnitte, die an den mindestens einen am Ende offenen Einschnitt angrenzen, mit deren freien Enden voneinander weg.

Wesentlich ist bei dem erfindungsgemäßen Verfahren, dass in das Blech mindestens ein Einschnitt eingebracht wird, der an einem Ende offen ist. Dies bedeutet, dass an diesen besonderen Einschnitt angrenzend, somit beidseitig dieses Einschnitts, Blechabschnitte gebildet werden, die unabhängig voneinander geformt werden können. Bei dem erfindungsgemäßen Verfahren ist in diesem Zusammenhang von Bedeutung, dass das Formen dieser Blechabschnitte, zwischen denen dieser besondere Einschnitt angeordnet ist, mit deren freien Enden voneinander weg erfolgt. Diese Blechabschnitte werden mit ihren freien Enden nicht in derselben Richtung geformt, sondern voneinander weg. Die Konsequenz ist, dass im Bereich jedes Blechabschnittes quasi ein Teilfüllkörper gebildet wird, der für sich alleine betrachtet, bereits einen eigenständigen, technisch einsetzbaren Füllkörper darstellt. Die Teilfüllkörper sind miteinander verbunden, da der diskutierte Einschnitt nur an dem einen Enden offen ist, allerdings am anderen Ende geschlossen ist und somit in diesem Bereich die Blechabschnitte miteinander verbunden sind.

Durch die genannte Gestaltung wird ein Füllkörper erzeugt, mit nebeneinander angeordneten Teilfüllkörpern, wobei unter nebeneinander angeordnet zu verstehen ist, dass diese im Wesentlichen nebeneinander angeordnet sind, weil sie sich zumindest in einem Bereich des Füllkörpers, der der Wandstärke des Bleches entspricht oder aber, jeweils entsprechend dem Verformungsgrad, in einem größeren Bereich überdecken. Durch die Möglichkeit mittels des erfindungsgemäßen Verfahrens einen Füllkörper zu schaffen, der Teilfüllkörper aufweist, kann eine Struktur gebildet werden, die ein günstiges Verhältnis von Höhe H des Füllkörpers zum formalem Füllkörperdurchmesser $\Phi$ aufweist.

Dieser formale Füllkörperdurchmesser $\Phi$ errechnet sich aus $\sqrt{\dfrac{L \cdot B}{\pi} \cdot 2}$, mit L = Länge des Füllkörpers und B = Breite des Füllkörpers. Das Verhältnis $\dfrac{H}{\Phi}$ beträgt insbesondere < 0,6. Der formale Füllkörperdurchmesser berechnet sich über eine formale Gleichsetzung der größten Stirnfläche L · B eines umhüllenden Quaders mit einer Kreisfläche.

Das Verfahren zur Herstellung des Füllkörpers ist unterschiedlichen Modifikationen zugänglich, wobei die als bevorzugt angesehenen nachfolgend erörtert sind:

So können die Verfahrensschritte a. bis e. grundsätzlich in beliebiger Abfolge, selbstverständlich unter dem Aspekt der technischen Machbarkeit vollzogen werden. So ist insbesondere vorgesehen, dass die Verfahrensschritte a. bis e. nacheinander vollzogen werden. Sie können aber durchaus auch in vertauschter Reihenfolge und mehrere Verfahrensschritte, insbesondere die Verfahrensschritte a. bis d. gleichzeitig erfolgen. Von besonderem Vorteil ist es, wenn mehrere Verfahrensschritte mittels eines Werkzeugs umgesetzt werden. Dieses könnte somit das Blech definierter Abmessung aus dem Band ausschneiden, beim weiteren Einwirken auf das Band die Einschnitte einbringen, einschließlich des mindestens einen Einschnitts, der an einem Ende offen ist, ferner die Streifenabschnitte in Bogenform formen.

Die Verfahrensschritte a. bis e. werden mittels geeigneter technologischer Verfahren vollzogen. Es ist insbesondere daran gedacht, das Verfahren durch Schneiden und/oder Biegen und/oder Stanzen zu bewerkstelligen. Ein zum Einsatz kommendes Werkzeug kann alle vorgenannten technologischen Verfahren zur Anwendung bringen.

Diejenigen Einschnitte, die in das Blech eingebracht werden, die jeweils im Bereich beider Enden geschlossen sind, dienen der Bildung jeweils eines Streifenabschnitts zwischen zwei nebeneinander angeordneten Einschnitten, sodass der jeweilige Streifenabschnitt anschließend in Bogenform geformt werden kann. Dieses Formen der jeweiligen Streifenabschnitte kann, bezogen auf die Ausgangsebene des Bandes, durchaus in der einen Richtung als auch in der anderen Richtung geschehen, somit eine Ausbuchtung nach außen oder innen betreffen.

Die Bedeutung des Merkmals des Formens der Blechabschnitte, die an den mindestens einen, am Ende offenen Einschnitt angrenzen, mit deren freien Enden voneinander weg, ist umfassend zu verstehen. Im Sinne des erfindungsgemäßen Verfahrens ist es als ausreichend anzusehen, wenn diese Blechabschnitte mit deren freien Enden voneinander weg geformt werden und demzufolge die Blechabschnitte insgesamt, ausgehend von dem Bereich des Einschnittes, der dem offenen Ende abgewandt ist, quasi divergieren. Es wird allerdings als besonders vorteilhaft angesehen, wenn die voneinander weggebogenen Blechabschnitte so geformt sind, dass mindestens ein Blechabschnitt, vorzugsweise jeder Blechabschnitt, gegebenenfalls mit einem anderen Blechabschnitt auf diesem Niveau eine geschlossene Ringstruktur bildet. Demzufolge ist der jeweilige Blechabschnitt mit dem Ende, das dem offenen Ende des Einschnitts zugewandt ist, so weit gebogen, dass er das Blech im Bereich desjenigen Endes kontaktiert, im Bereich dessen sich das geschlossene Ende dieses Einschnitts befindet.

Selbstverständlich kann der jeweilige Blechabschnitt auch anders geformt werden, als zu einer geschlossenen Ringstruktur. Es ist beispielsweise eine gegensinnig gerichtete U-förmige Struktur oder eine gegensinnig gerichtete kurvenförmige Struktur denkbar. Bei diesen Gestaltungen sind zumindest zwei Einschnitte vorgesehen, die jeweils an einem Ende offen sind. Diese Einschnitte sind hintereinander somit in einer Flucht in das Blech geschnitten, sodass das offene Ende des einen Einschnitts im Bereich des einen Blechendes, das offene Ende des anderen Einschnitts am abgewandten Blechende positioniert ist. Hierdurch ergibt sich die Möglichkeit, die gebildeten Blechabschnitte, in diesem Fall wären es mindestens vier Blechabschnitte auf Grund der beiden am Ende offenen Einschnitte, von einem zentraleren Bereich des Bleches, insbesondere einem Mittelbereich des Bleches voneinander wegzuformen, um so die U-förmige Struktur ohne die gegensinnig gerichtete kurvenförmige Struktur zu erhalten.

Gemäß einer Weiterbildung der Erfindung können die Einschnitte in Längsrichtung des Blechs, hintereinander und/oder nebeneinander, in das Blech geschnitten werden. Dies gilt sowohl für die Einschnitte, deren Enden alle geschlossen sind als auch für die Einschnitte, die jeweils an einem Ende offen sind. Die Einschnitte, die vorzugsweise in Breitenerstreckung des Blechs nebeneinander angeordnet sind, abgesehen der am Ende offene Einschnitt, weisen vorzugsweise dieselbe Länge auf.

Es ist grundsätzlich nicht erforderlich, dass die Streifenabschnitte, in deren Querrichtung, eben ausgebildet sind. Es ist durchaus denkbar, den jeweiligen Streifenabschnitt quer zu dessen Längserstreckung mit einer Profilierung zu versehen. Diese kann gewölbt, insbesondere. U-förmig oder auch gekantet, insbesondere V-förmig gestaltet sein. Diese Querprofilierung kann durch Biegen oder Stanzen erzeugt werden. Abgesehen davon ist es möglich, einen nicht profilierten Streifen mit einer seitlichen Ausstanzung und/oder einem Durchgangsloch, gegebenenfalls mit einem das Durchgangsloch umgebenden Wulst zu versehen. Dies ist besonders vorteilhaft für eine hohe mechanische Stabilität des Füllkörpers sowie ein verbessertes Auslaufverhalten bzw. Abtropfen der Flüssigkeit.

Bei dem erfindungsgemäßen Verfahren ist somit wesentlich, dass aus dem Band ein Wandabschnitt bestimmter Länge, Breite und Wandstärke geschnitten wird. Es werden dann geeignete Einschnitte in das Band eingebracht, mit dem Ergebnis, dass sich ein bestimmtes Muster an Streifenabschnitten bzw. bestimmte Überstrukturen an Streifenabschnitten ergeben, wobei die geometrische Anordnung dieser Überstrukturen die makroskopische Füllkörperendform im Wesentlichen bestimmt. Die Streifenabschnitte werden in Bogenform geformt, beispielsweise plan, eckig, gekrümmt, dreidimensional profiliert, wobei benachbarte Streifen in die gleiche Richtung bezüglich der ursprünglichen Blechebene herausgekrümmt werden oder jeweils abwechselnd nach vorne bzw. nach hinten bezüglich der ursprünglichen Blechebene herausgekrümmt werden. Es erfolgt ferner das makroskopische Biegen der Streifenüberstrukturen in die jeweilige Füllkörperendform. Es kann das Nachprofilieren einzelner Streifen, zum Beispiel in V-Form oder ähnlich erfolgen. Die Formung der Füllkörperendform kann beispielsweise durch einen Stanzvorgang mit entsprechend geformten Positiv- und Negativ-Matritzen erfolgen, wobei entsprechend der Füllkörperendform in der Positiv-Matritze die entsprechenden Berge und Täler bezüglich der Blechebene früh gegeben sind und in der Negativ-Matritze entsprechend umgekehrte Ausbuchtungen.

Die Aufgabe wird schließlich durch einen nach dem vorbeschriebenen Verfahren hergestellten Füllkörper gelöst, insbesondere einen Füllkörper für Stoff- und/oder Wärmeaustauschkolonnen, die von einer Gas- und/oder Flüssigkeitsströmung durchsetzt werden, wobei der Füllkörper eine Füllkörpereinheit ist, die durch eine Überstruktur aus mindestens zwei miteinander verbundenen Teilfüllkörpern gebildet ist, wobei die Teilfüllkörper auf unterschiedlichem Höhenniveau nebeneinander angeordnet sind.

Benachbarte Teilfüllkörper sind insbesondere über einen Steg miteinander verbunden. Die Teilfüllkörper weisen insbesondere nach außen gekrümmte Bereiche auf, wobei benachbarte Teilfüllkörper in ihrem jeweils nach außen gekrümmten Bereich miteinander verbunden sind.

Der Füllkörper stellt somit eine Überstruktur aus mindestens zwei miteinander verbundenen Teilfüllkörpern dar. Jeder Teilfüllkörper stellt für sich alleine betrachtet bereits einen eigenständigen, vollwertigen Füllkörper mit günstigen Eigenschaften - zum Beispiel einem niedrigen Druckverlust — dar. Durch diese Überstruktur werden zwei oder mehrere Teilfüllkörper fest und in geordneter Weise miteinander verbunden, sodass diese sich in der Schüttung nicht unabhängig voneinander ausrichten können, der Ordnungsgrad also ansteigt. Obwohl es sich beim erfindungsgemäßen Füllkörper um einen sogenannten Schüttgutfüllkörper handelt, richtet sich der Füllkörper während der Befüllung durch diese Überstruktur bevorzugt, und zwar strömungsgünstiger als zwei voneinander unabhängige und nicht miteinander verbundene Füllkörper aus. Charakteristisch für den Füllkörper ist die versetzte Anordnung der Teilfüllkörper, dergestalt, dass die längliche bzw. flache Gesamtausführung resultiert. Hierbei beträgt das Verhältnis $\frac{H}{\Phi}$ des aus den Teilkörpern gebildeten Füllkörpers vorzugsweise < 0,6. Benachbarte Teilfüllkörper können demzufolge in verschiedenen Ebenen angeordnet sein, die sowohl parallel als auch zueinander geneigt sein können. Die einzelnen Streifen können in Richtung ihrer Breite V- oder U-förmig über die ganze Länge oder auch nur über einen Teil der Länge geformt sein. Die bevorzugte Form des Füllkörpers bzw. des jeweiligen Teilfüllkörpers ist annähernd rechteckig, insbesondere annähernd quadratisch.

Weitere bevorzugte Merkmale der Erfindung sind in der Beschreibung der Figuren sowie in den Figuren selbst dargestellt.

In den Figuren ist die Erfindung anhand mehrerer Ausführungsformen dargestellt.

Es stellt dar:

| | |
|---|---|
| Figur 1 | eine Draufsicht eines Metallbandes, |
| Figur 2 | eine Draufsicht eines von dem Metallband abgeschnittenen Bleches definierter Abmessung mit in dieses eingebrachten geschlossenen Einschnitten, |
| Figur 3 | das in Figur 2 gezeigte Blech mit vier in dieses eingebrachten Einschnitten, die jeweils an einem Ende offen sind, |
| Figur 4 | eine Seitenansicht des in Figur gezeigten Bleches, |
| Figur 5 | eine Seitenansicht des Bleches, nach dem Formen der Streifenabschnitte in Bogenform, |
| Figur 6 | eine Seitenansicht des Bleches, ausgehend von der Verformung des Bleches gemäß Figur 4, nunmehr mit sieben geformten Blechabschnitten im Bereich der Einschnitte, die an einem Ende offen sind, |
| Figur 7 | in der Ansicht gemäß Figur 6 den vollständig geformten Füllkörper, bei dem drei Teilfüllkörper gebildet sind, die jeweils eine geschlossene Ringstruktur aufweisen, |
| Figur 8 | den in der Figur 7 gezeigten Füllkörper, in einer Seitenansicht, |
| Figuren 9 und 10 | einen weiteren gemäß dem erfindungsgemäßen Verfahren erzeugten Füllkörper in einer Draufsicht und einer Seitenansicht, |
| Figuren 11 und 12 | einen weiteren entsprechend dem erfindungsgemäßen Verfahren erzeugten Füllkörper in einer Draufsicht und einer Seitenansicht, |
| Figuren 13 und 14 | einen weiteren entsprechend dem erfindungsgemäßen Verfahren erzeugten Füllkörper in einer Draufsicht und einer Seitenansicht, |
| Figuren 15 und 16 | eine Modifizierung eines beim jeweiligen Teilfüllkörper Verwendung findenden Streifens, in einer Seitenansicht und einer Draufsicht gesehen, |
| Figuren 17 und 18 | eine weitere Modifizierung eines beim jeweiligen Teilfüllkörper Verwendung findenden Streifens, in einer Seitenansicht und einer Draufsicht gesehen, |
| Figuren 19 und 20 | eine weitere Modifizierung eines beim jeweiligen Teilfüllkörper Verwendung findenden Streifens, in einer Seitenansicht und einer Draufsicht gesehen. |

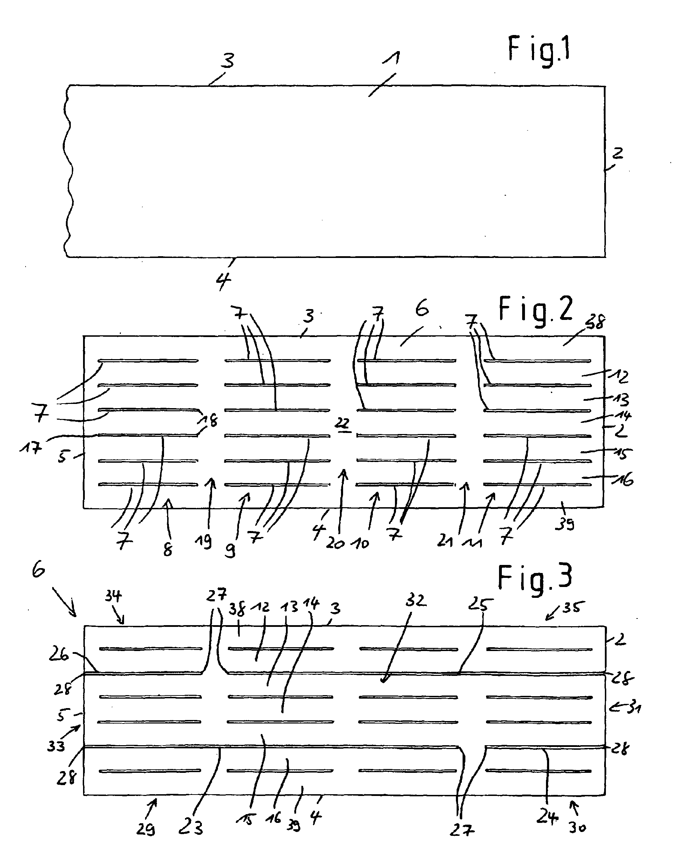

Figur 1 veranschaulicht das den Ausgang des Herstellungsvorgangs des Füllkörpers bildende ebene Metallband 1 mit vorlaufender Kante 2 sowie seitlichen Kanten 3 und 4. Dieses Metallband 1 wird im Herstellungsprozess um eine definierte Länge vorgeschoben, um später einen Füllkörper vorgegebener Abmessung zu erhalten und parallel zur vorlaufenden Kante 2 entlang der nachlaufenden Kante 5 geschnitten, sodass sich, wie in Figur 2 dargestellt, ein rechteckiges Blech 6 ergibt. Dessen Blechstärke beträgt 0,4 mm.

Wie der Darstellung der Figur 2 ferner zu entnehmen ist, werden in das Blech 6, parallel zu den seitlichen Kanten 3 und 4, eine Vielzahl von Einschnitten 7 geordnet eingebracht. Die Einschnitte 7 haben jeweils die selbe Länge. Es werden vier Gruppen 8, 9, 10 und 11 gebildet, wobei jede Gruppe von Einschnitten sechs parallel zueinander angeordnete Einschnitte 7 aufweist, sodass durch diese Einschnitte fünf parallel zueinander angeordnete Streifenabschnitte 12, 13, 14, 15, 16 gleicher Breite gebildet sind. Die Einschnitte 7 sind im Bereich der mit den Bezugsziffern 17 und 18 bezeichneten Enden geschlossen. Zwischen benachbarten Gruppen von Einschnitten 8 und 9 bzw. 9 und 10 bzw. 10 und 11 ist das Blech 6 nicht eingeschnitten, sodass dort ein nicht eingeschnittener Verbindungsbereich 19, 20, 21 verbleibt. Im Verbindungsbereich 20 ist das Blech mit einem sich quer zum Blech 6, somit parallel zur vorlaufenden Kante 2 erstreckenden Profilierung 22 versehen, die zweckmäßig beim Einschneiden des Blechs 6 durch Stanzen miteingestanzt wird. Der Abstand der Gruppen 9 und 10 von Einschnitten 7 zu der Profilierung 22 entspricht ungefähr dem Abstand der Gruppen 9 und 10 von Einschnitten 7 zu den angrenzenden Gruppen 8 und 11 von Einschnitten 7 und auch dem Abstand der Gruppen 8 und 11 von Einschnitten 7 zu der nachlaufenden Kante 5 bzw. vorlaufenden Kante 2.

Figur 3 zeigt, dass, gleichfalls durch Stanzen, wobei dies vorzugsweise unmittelbar beim Einbringen der Einschnitte 7 vonstatten gehen kann, vier Einschnitte 23, 24, 25 und 26 in das Blech 6 eingeschnitten werden, die sich dadurch auszeichnen, dass sie im Bereich eines Endes 27 geschlossen, im Bereich des anderen Endes 28 hingegen offen sind. Der Einschnitt 23 reicht von der nachlaufenden Kante 5 des Bleches 6 bis zu dem dem Verbindungsbereich 21 zugewandten Ende des Einschnitts 7 der Gruppe 10 von Einschnitten 7, wobei dieser Einschnitt 23 mit den drei Einschnitten 7, die zwischen den Streifenabschnitten 15 und 16 angeordnet ist, zusammenfällt. Der Einschnitt 24 entspricht dem Einschnitt 7 der Gruppe 11 von Einschnitten 7 zwischen den Streifenabschnitten 15 und 16, wobei dieser Einschnitt 24 allerdings bis zur vorlaufenden Kante 2 des Bleches 6 geführt ist. Der Einschnitt 25 ist entsprechend dem Einschnitt 23 ausgebildet; er reicht allerdings von der vorlaufenden Kante 2 des Bleches 6 zu dem dem Verbindungsbereich 19 zugewandten Ende des Einschnittes 7 der Gruppe 9 von Einschnitten 7, und zwar desjenigen Einschnitts 7, der zwischen den Streifenabschnitten 12 und 13 angeordnet ist. Der Einschnitt 28 entspricht dem Einschnitt 7 der Gruppe 8 von Einschnitten 7, der zwischen den Streifenabschnitten 12 und 13 angeordnet ist, wobei dieser Einschnitt 26 aber bis zur nachlaufenden Kante 5 des Bleches verlängert ist.

Durch die Einschnitte 23, 24, 25, 26 wird das Blech 6 in sieben Blechabschnitte 29, 30, 31, 32, 33, 34 und 35 aufgeteilt, wobei die Blechabschnitte 29 und 30 im Verbindungsbereich 21 aneinander grenzen, die Blechabschnitte 30 und 31 im Verbindungsbereich 21 aneinander grenzen, die Blechabschnitte 31 und 32 im Verbindungsbereich 21 aneinander grenzen, die Blechabschnitte 32 und 33 im Verbindungsbereich 19 aneinander grenzen, die Blechabschnitte 33 und 34 im Verbindungsbereich 19 aneinander grenzen und die Blechabschnitte 34 und 35 im Verbindungsbereich aneinander grenzen.

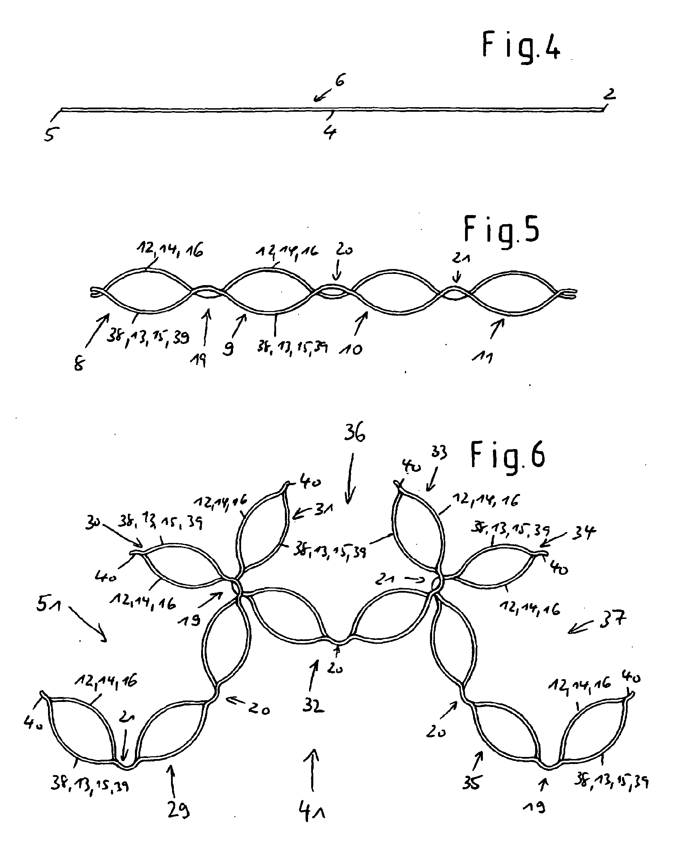

Mittels der Blechabschnitte 29 und 30 ist der erste Teilfüllkörper 51, mittels der Blechabschnitte 31, 32 und 33 der zweite Teilfüllkörper 36 und mittels der Blechabschnitte 34 und 35 der dritte Teilfüllkörper 37 bildbar (Figur 6).

Bezogen auf die jeweilige Gruppe 8 bis 11 von Einschnitten 7 ist zwischen der seitlichen Kante 3 und dem dieser benachbarten Einschnitt 7 des Streifenabschnitts 12 ein weiterer Streifenabschnitt 38 und zwischen der seitlichen Kante 4 und dem in dieser benachbarten Einschnitt des Streifenabschnitts 16 ein weiterer Streifenabschnitt 39 gebildet.

Bezogen auf die flache Orientierung des Bleches 6 gemäß der Figuren 2, 3 und 4 werden, bezogen auf die jeweilige Gruppe 8 bis 11 von Einschnitten 9 in einem Formwerkzeug die Streifenabschnitte 12, 14 und 16 nach unten gebogen und die Streifenabschnitte 38, 13, 15 und 39 nach oben gebogen. Dieser Zustand ist in Figur 5 verdeutlicht. Des Weiteren werden die Blechabschnitte 29 bis 35 mit deren freien Enden 40 voneinander weggebogen. Dieser Zustand ist in Figur 6 veranschaulicht. Dies bedeutet konkret, dass die Blechabschnitte 29 und 32, 33 im Bereich deren freien Enden 40 voneinander weggebogen werden, die Blechabschnitte 30 und 31 im Bereich deren freien Enden 40 voneinander weggebogen werden, die Blechabschnitte 33 und 34 im Bereich deren freien Enden 40 voneinander weggebogen werden und die Blechabschnitte 34 und 31, 32 im Bereich deren freien Enden 40 voneinander weggebogen werden. Es ergibt sich auf diese Art und Weise ein Füllkörper, der aus den drei Teilfüllkörpem 36, 37 und 51 besteht, die jeweils auf unterschiedlichem Niveau angeordnet sind. Der mittlere Teilfüllkörper 36 ist auf mittlerem Niveau angeordnet, der Teilfüllkörper 37 auf höherem Niveau, der Teilfüllkörper 51 auf tieferem Niveau.

Durch voneinander Wegbewegen der Blechabschnitte 29 bis 35 lassen sich Teilfüllkörper in beliebiger Form herstellen, beispielsweise wie in Figur 6 gezeigt. Bei dem dort veranschaulichten Füllkörper 41 sind die Blechabschnitte 30 und 31 bzw. 33 und 34 V-förmig angeordnet, während die Blechabschnitte 29, 30 bzw. 31, 32, 33 bzw. 34, 35 jeweils annähernd die Form eines U bilden.

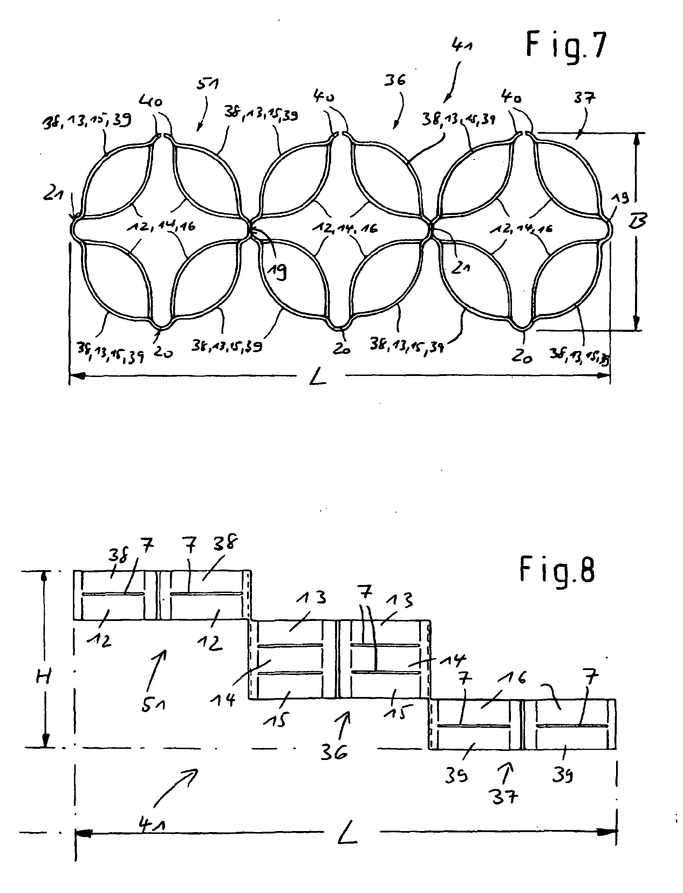

Figur 7 zeigt einen weiter verformten Füllkörper 41, ausgehend aus der Gestaltung gemäß Figur 6. Diese Endform wird durch weiteres Biegen der Blechabschnitte 29 bis 35 erhalten. Die Teilfüllkörper 36, 37, 51 weisen jeweils eine geschlossene Ringstruktur auf. Hierzu ist das freie Ende 40 des Blechabschnitts 29 gegen das freie Ende des Blechabschnitts 30 gebogen, das freie Ende 40 des Blechabschnitts 31 gegen das freie Ende 40 des Blechabschnitts 33 gebogen und schließlich das freie Ende des Blechabschnitts 34 gegen das freie Ende 40 des Blechabschnitts 35 gebogen.

Die den Füllkörper gemäß der Gestaltung nach Figur 7 in einer Seitenansicht zeigende Figur 8 verdeutlicht die Anordnung der Teilfüllkörper 36, 37 und 51 auf derem unterschiedlichen Niveau. Diese Teilfüllkörper sind im Verbindungsbereich 19 bzw. 21 miteinander verbunden.

Die äußeren Abmessungen des in den Figuren 7 und 8 gezeigten Füllkörpers 41 betragen, bezogen auf den umhüllenden Quader: L = 145 mm, W = 51 mm, H = 50 mm, bei der genannten Blechstärke des Streifens von 0,4 mm.

Die abstrakte, tatsächliche Form des Füllkörpers 41 ist eine Überstruktur bestehend aus den drei Teilfüllkörpern 36, 37, 51, die als flache Zylinder ausgebildet sind. Diese berühren sich im Bereich der jeweiligen freien Enden 40 deren Blechabschnitten. Die benachbarten Streifenabschnitte 12 bis 16 sind entgegengesetzt abwechselnd nach vorne bzw. nach hinten bezüglich der ursprünglichen gemeinsamen Ebene herausgebogen. Der jeweilige Streifenabschnitt weist eine Länge von ungefähr 30 mm auf. Die Streifenabschnitte, die nach innen gebogen sind, und zwar in der gleichen Bogenform, sind derart bemessen, dass zwei diagonal gegenüberliegende Bogenkuppen 18 mm bis 19 mm auseinander liegen (gemessen in Richtung der Flächennormalen). Die nach außen gebogenen Streifenabschnitte (gleichfalls mit einer Länge von ungefähr 30 mm und in der gleichen Bogenform) sind so bemessen, dass ein Abstand der Bogenkuppen der nach außen geformten Streifen zu den Bogenkuppen der nach innen geformten Streifen von 14,5 mm bis 16 mm resultiert (gemessen in Richtung der Flächennormalen). Zwischen zwei benachbarten Bögen verbleibt jeweils ein 5 mm bis 6 mm langer, leicht nach außen gewölbter Bereich (in der Mitte um 1 mm bis 2 mm aus der ursprünglichen bzw. imaginären Ebene herausgewölbt).

Der veranschaulichte Füllkörper 41 weist ein Verhältnis von $\dfrac{H}{\Phi} < 0{,}6$ auf mit $\Phi = \sqrt{\dfrac{L \cdot B}{\pi} \cdot 2}$. L, B, H sind die aufeinander senkrecht stehenden Seitenlängen (L = Länge, B = Breite, H = Höhe) eines Quaders und damit die einfachste geometrische umhüllende Körperform, in die der Füllkörper hinein gesteckt werden kann. Ein solcher formater Durchmesser errechnet sich somit über eine formale Gleichsetzung der größten Stirnfläche L · B eines umhüllenden Quaders mit einer Kreisfläche.

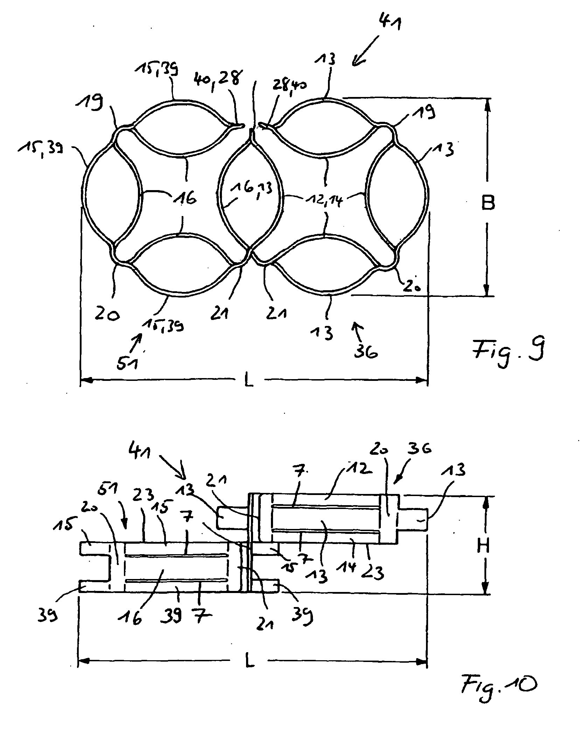

Die Figuren 9 und 10 veranschaulichen einen ähnlich der Ausführungsform nach den Figuren 7 und 8 ausgebildeten Füllkörper 41, der allerdings nur zwei Teilfüllkörper 35 und 36 aufweist, die auf unterschiedlichem Niveau angeordnet sind. Mit der Ausführungsform, die in den bisherigen Figuren ausführlich beschrieben wurde übereinstimmende Teile sind der Einfachheit halber mit den selben Bezugsziffern bezeichnet.

Der Füllkörper 41 gemäß der Ausführungsform nach den Figuren 9 und 10 unterscheidet sich von der Eingangs erörterten Ausführungsform dadurch, dass das mit den diversen Einschnitten 7 versehene Blech 6 nur mit einem Einschnitt versehen wird, der an einem Ende offen ist. Dieser ist als Einschnitt 23 bezeichnet, mit seinem offenen Ende 28. Dieser Einschnitt reicht bis zum Verbindungsbereich 21, sodass bei diesem Blech 6 nur die Blechabschnitte 29 bis 33 gebildet sind, wobei die Blechabschnitte 30 und 31 wegen des fehlenden Einschnitts 24 ein einziger Blechabschnitt sind. Demzufolge werden nur der Blechabschnitt 29 und die durch die Blechabschnitte 32, 33 gebildete Einheit mit deren freien Enden 40 voneinander weggebogen, bis sie das freie Ende 40 des sich über die gesamte Breite des Blechs erstreckenden Blechabschnitts 30, 31 kontaktieren. In diesem Blechabschnitt überlappen sich somit die beiden Teilfüllkörper 51 und 36, wie es anschaulich der Darstellung der Figuren 9 und 10 zu entnehmen ist. Die Art der Herstellung dieses Füllkörpers 41 ergibt sich, unter Berücksichtigung der vorgenannten unterschiede, analog derjenigen Eingangs genannten beschriebenen Ausführungsform.

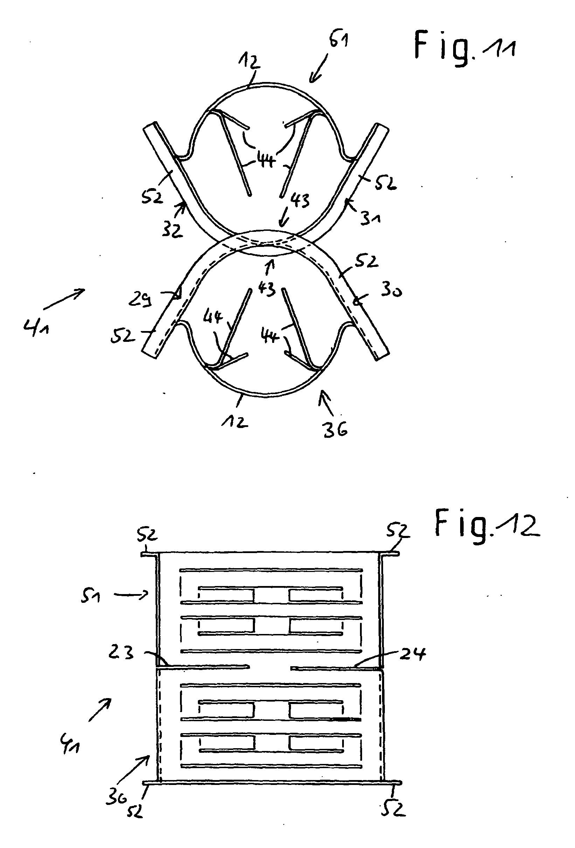

Der Füllkörper 41, nach der Ausführungsform gemäß der Figuren 11 und 12, zeichnet sich dadurch aus, dass durch Bildung zweier Einschnitte 23, 24, die an einem Ende offen sind, und in Folge der vorgenommenen Formung der erzeugten Streifenabschnitte 29, 30, 31 und 32 voneinander weg, zwei Teilfüllkörper 36 und 51 entstehen, die jeweils U-Form besitzen, wobei die beiden Teilfüllkörper 36 und 51 im Bereich der Scheitel 43 zwischen den Blechabschnitten 29 und 30 bzw. 31 und 32 miteinander verbunden sind. Gebogene Streifenabschnitte bei diesem Füllkörper 41, die den Streifenabschnitten 12 bis 16 gemäß der ersten Ausführungsform entsprechen, sind teilweise durchtrennt und es sind die hierdurch erzeugten Streifenabschnitte 44 in das innere des jeweiligen Teilfüllkörpers gebogen. Die einander abgewandten Kanten 52 der beiden Teilfüllkörper 36 und 51 sind bei diesem Füllkörper 41 in eine Stellung parallel zueinander abgebogen, somit rechtwinkelig positioniert.

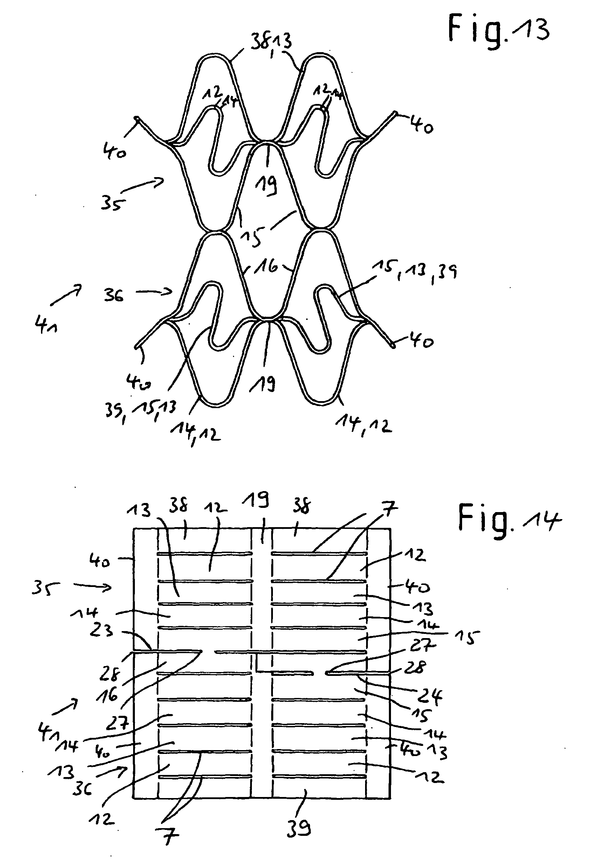

Die Figuren 13 und 14 zeigen eine weiter modifizierte Ausführungsform eines Füllkörpers 41, das aus einer Vielzahl von wellenförmig angeordneten Streifenabschnitten besteht, die den Streifenabschnitten 12 bis 16 der ersten Ausführungsform entsprechen. Der Füllkörper ist mit zwei Einschnitten 23 und 24, die an den Enden offen sind, versehen, sodass zwei Teilfüllkörper 35 und 36 gebildet sind. Die Verbindung dieser Teilfüllkörper erfolgt in den Scheitelbereichen zweier Paare von Streifenabschnitten 12, 13.

Die folgenden Figuren verdeutlichen Modifizierungen der Streifenabschnitte der jeweiligen Füllkörperausführungsformen, insbesondere der Streifenabschnitte 12 bis 16. Selbstverständlich kann auch mehr als ein Streifen modifiziert werden oder es können auch unterschiedliche der nachstehenden Streifengestaltungen miteinander kombiniert werden.

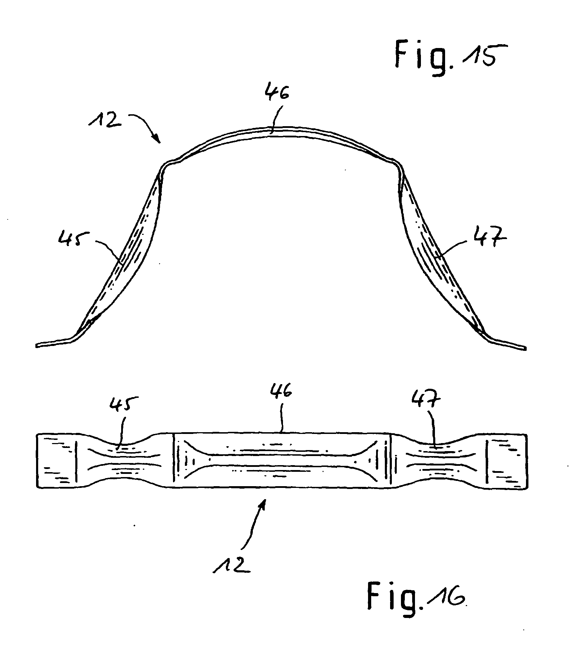

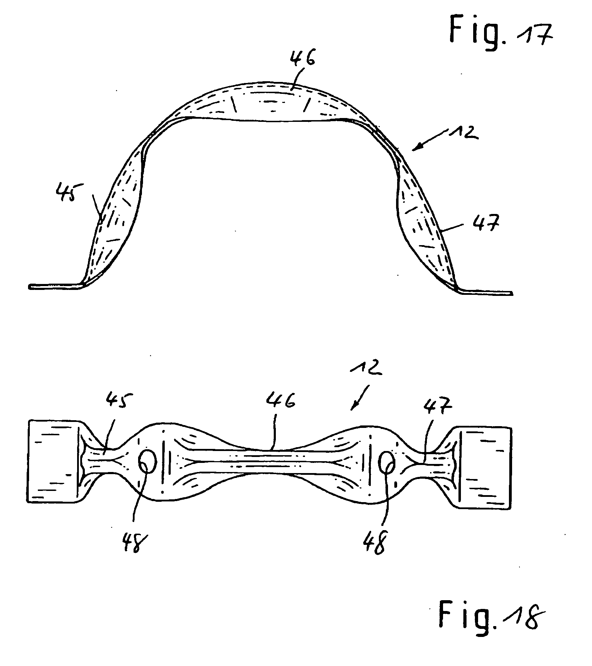

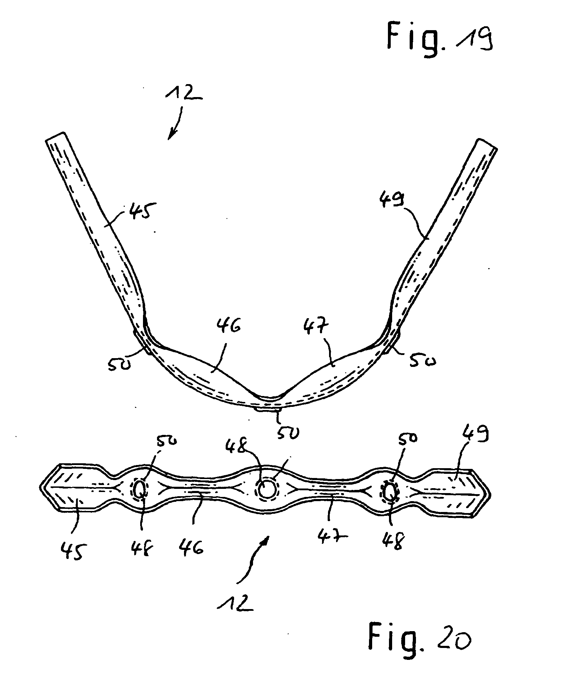

Die erste Modifizierung gemäß der Figuren 15 und 16, die einen Bogenabschnitt eines Streifenabschnitts, zum Beispiel des Streifenabschnitts 12 gemäß der Figuren 1 bis 8 zeigt, veranschaulicht, dass der jeweilige Streifen, bezogen auf dessen Längsrichtung, Streifenabschnitte 45, 46, 47 unterschiedlichen Querschnitts aufweist. Der Streifen ist zur Bildung der Streifenabschnitte geknickt. Der Querschnitt der Streifenabschnitte 45 und 47 ist V-förmig und der des Streifenabschnitts 46 als wesentlich flacheres V ausgebildet. Bei der Modifizierung nach den Figuren 17 und 18 sind die Streifenabschnitte 45, 46, 47 sehr stark verjüngt und weisen im Querschnitt U-Form auf. Taillierte Bereiche der Streifenabschnitte 45, 46, 47 bei dieser Modifizierung könnten durchaus auch durch eine seitliche Ausstanzung erzeugt werden. Im Verbindungsbereich der Streifenabschnitte 45 und 46 bzw. 46 und 47 gemäß dieser Modifizierung sind Durchgangslöcher 48 im Streifen vorgesehen, demzufolge im Bereich des größeren Querschnitts des Streifens. Bei der Modifizierung gemäß der Figuren 19 und 20 mit vier Streifenabschnitten 45, 46, 47 und 49, wobei die Streifenabschnitte 45 und 49 V-förmigen Querschnitt und die Streifenabschnitte 46 und 47 U-förmigen Querschnitt besitzen, sind im Bereich des Übergangs der Streifenabschnitte nicht nur die beschriebenen Durchgangslöcher 48 vorgesehen, sondern es sind diese Durchgangslöcher jeweils zusätzlich mit einem Wulst 50 versehen. Eine Modifizierung, die allerdings nicht veranschaulicht ist, kann darin bestehen, die jeweiligen Streifen 45, 46, 47, 49, bezogen auf deren ausgebogene Ebene, nicht parallel zueinander anzuordnen, sondern zueinander geneigt zu positionieren. Hierdurch ergibt sich zwischen benachbarten Streifen ein größerer oder kleinerer Spalt, je nachdem in welche Richtung die Streifen gebogen sind - aufeinander zu oder voneinander weg. -

## Patentansprüche

1. Verfahren zur Herstellung eines Füllkörpers (41) mit folgenden Schritten:

   a. Schneiden eines Bandes (1) aus Metall, sodass sich ein Blech (6) mit einer bestimmten Länge, Breite und Wandstärke ergibt,
   b. Einbringen von Einschnitten (7) in das Blech (6) zur Bildung von Streifenabschnitten (12 bis 16),
   c. Einbringen von mindestens einem Einschnitt (23, 24, 25, 26) in das Blech (6), wobei dieser Einschnitt (23, 24, 25, 26) an einem Ende (28) offen ist, zur Bildung von Blechabschnitten (29 bis 35),
   d. Formung von Streifenabschnitten (12 bis 16) in Bogenform,
   e. Formen der Blechabschnitte (29 bis 35), die an den mindestens einen am Ende (28) offenen Einschnitt (23, 24, 25, 26) angrenzen, mit deren freien Enden (40) voneinander weg.

2. Verfahren nach Anspruch 1, wobei die Verfahrensschritte a. bis e. nacheinander erfolgen, oder, insbesondere die Verfahrensschritte a bis d., im Wesentlichen gleichzeitig, mittels eines Werkzeugs, erfolgen.

3. Verfahren nach Anspruch 1 oder 2, wobei die Verfahrensschritte a. bis e. durch Schneiden und/oder Biegen und/oder Stanzen bewerkstelligt werden.

4. Verfahren nach einem der Ansprüche 1 bis 3, wobei mehr als ein an einem Ende (28) offener Einschnitt (23, 24, 25, 26) vorgesehen ist, und benachbarte an einem Ende (28) offene Einschnitte (23, 24, 25, 26) an unterschiedlichen Enden (2, 4) des Blechs (6) offen sind.

5. Verfahren nach einem der Ansprüche 1 bis 4, wobei beim Formen mindestens eines der Blecheinschnitte (29 bis 35) bzw. aller Blechabschnitte (29 bis 35), die an einen am Ende offenen Einschnitt (23 bis 26) angrenzen, eine geschlossene Ringstruktur (Figuren 7, 9), eine gegensinnig gerichtete U-förmige Struktur (Figur 11) oder eine gegensinnig gerichtete kurvenförmige Struktur (Figur 13) gebildet wird.

6. Verfahren nach einem der Ansprüche 1 bis 5, wobei die Einschnitte (7, 23 bis 26) in Längsrichtung des Blechs (6) hintereinander und/oder nebeneinander in das Blech geschnitten werden.

7. Verfahren nach einem der Ansprüche 1 bis 6, wobei die Einschnitte (7), die in Breitenerstreckung des Blechs (6) nebeneinander angeordnet sind, abgesehen von dem am Ende (28) offenen Einschnitt (23, 24, 25, 26), dieselbe Länge aufweisen.

**8.** Verfahren nach einem der Ansprüche 1 bis 7, wobei zwei an einem Ende (28) offene Einschnitte (23, 24; 25, 26) in deren jeweiligen Verlängerung angeordnet sind.

**9.** Verfahren nach einem der Ansprüche 1 bis 8, wobei die Streifenabschnitte (12 bis 16) quer zu deren Längserstreckung mit einer Profilierung versehen werden.

**10.** Nach dem Verfahren gemäß einem der Ansprüche 1 bis 9 hergestellter Füllkörper (41), insbesondere für Stoff- und/oder Wärmeaustauschkolonnen, die von einer Gas- und/oder Flüssigkeitsströmung durchsetzt werden, wobei der Füllkörper (41) eine Füllkörpereinheit ist, die durch eine Überstruktur aus mindestens zwei miteinander verbundenen Teilfüllkörpern (36, 37, 51) gebildet ist, wobei die Teilfüllkörper (36, 37, 51) auf unterschiedlichem Höhenniveau nebeneinander angeordnet sind.

**11.** Füllkörper nach Anspruch 10, wobei der Füllkörper (41) durch drei Teilfüllkörper (36, 37, 51) gebildet ist, insbesondere durch drei, eine Ringstruktur aufweisende Teilfüllkörper (36, 37, 51) gebildet ist, wobei alle drei Teilfüllkörper (36, 37, 51) auf unterschiedlichem Höhenniveau angeordnet sind.

**12.** Füllkörper nach Anspruch 10 oder 11, wobei das Verhältnis $\dfrac{H}{\Phi}$ des durch die Teilfüllkörper (36, 37, 51) gebildeten Füllkörpers (41) < 0,6 beträgt, mit H = Höhe des Füllkörpers (41)

$$\Phi = \sqrt{\frac{L \cdot B}{\pi}} \cdot 2$$

L = Länge des Füllkörpers (41)
B = Breite des Füllkörpers (41)

**13.** Füllkörper nach einem der Ansprüche 10 bis 12, wobei der benachbarte Teilfüllkörper (36, 37, 51) über einen Steg miteinander verbunden sind.

**14.** Füllkörper nach einem der Ansprüche 10 bis 13, wobei die Teilfüllkörper (36, 37, 51) nach außen gekrümmte Bereiche aufweisen und die Teilfüllkörper in diesen Bereichen miteinander verbunden sind.

**Claims**

**1.** Method of producing a filling body (41), comprising the following steps:

   a. cutting a strip (1) of metal, such that a sheet (6) having a certain length, width and wall thickness is obtained,
   b. making cuts (7) in the sheet (6) for forming strip sections (12 to 16),
   c. making at least one cut (23, 24, 25, 26) in the sheet (6), this cut (23, 24, 25, 26) being open at one end (28), for forming sheet-metal sections (29 to 35),
   d. shaping the strip sections (12 to 16) into an arched form,
   e. forming the sheetmetal sections (29 to 35), which adjoin the at least one cut (23, 24, 25, 26) open at the end (28), away from one another with their free ends (40).

**2.** Method according to Claim 1, wherein the method steps a. to e. are effected one after the other or in particular the method steps a. to d. are effected essentially simultaneously, by means of a tool.

**3.** Method according to Claim 1 or 2, wherein the method steps a. to e. are effected by cutting and/or bending and/or stamping.

**4.** Method according to one of Claims 1 to 3, wherein more than one cut (23, 24, 25, 26) open at one end (28) is provided, and adjacent cuts (23, 24, 25, 26) open at one end (28) are open at different ends (2, 4) of the sheet (6) .

**5.** Method according to one of claims 1 to 4, wherein, during the forming of at least one of the sheetmetal sections (29 to 35) or of all the sheetmetal sections (29 to 35) which adjoin a cut (23 to 26) open at one end, a closed ring structure (Figures 7, 9), a U structure (Figure 11) oriented in opposite directions or a curved structure (Figure 13) oriented in opposite directions is formed.

6. Method according to one of Claims 1 to 5, wherein the cuts (7, 23 to 26) are made in the sheet one behind the other and/or next to one another in the longitudinal direction of the sheet (6).

7. Method according to one of Claims 1 to 6, wherein the cuts (7) which are arranged next to one another in the width of the sheet (6) have the same length apart from the cut (23, 24, 25, 26) which is open at the end (28).

8. Method according to one of Claims 1 to 7, wherein two cuts (23, 24; 25, 26) open at one end (28) are arranged in their respective extension.

9. Method according to one of Claims 1 to 8, wherein the strip sections (12 to 16) are provided with profiling transversely to their longitudinal extent.

10. Filling body (41) produced according to the method according to one of Claims 1 to 9, in particular for mass transfer columns and/or heat exchange columns, through which a gas or liquid flow passes, wherein the filling body (41) is a filling body unit which is formed by a substructure of at least two partial filling bodies (36, 37, 51) connected to one another, wherein the partial filling bodies (36, 37, 51) are arranged next to one another at different levels.

11. Filling body according to Claim 10, wherein the filling body (41) is formed by three partial filling bodies (36, 37, 51), in particular by three partial filling bodies (36, 37, 51) having a ring structure, wherein all three partial filling bodies (36, 37, 51) are arranged at different levels.

12. Filling body according to Claim 10 or 11, wherein the ratio $\dfrac{H}{\Phi}$ of the filling body (41) formed by the partial filling bodies (36, 37, 51) is < 0.6, where H = height of the filling body (41),

$$\Phi \;=\; \sqrt{\frac{L.B}{\Pi}}.2$$

L = length of the filling body (41),
B = width of the filling body (41).

13. Filling body according to one of Claims 10 to 12, wherein the adjacent partial filling bodies (36, 37, 51) are connected to one another via a web.

14. Filling body according to one of Claims 10 to 13, wherein the partial filling bodies (36, 37, 51) have regions curved outwards and the partial filling bodies are connected to one another in these regions.

**Revendications**

1. Procédé de fabrication d'un corps de garnissage (41), lequel procédé comprend les étapes qui consistent à :

    a. découper un feuillard (1) en métal de manière à obtenir une tôle (6) d'une longueur, d'une largeur et d'une épaisseur définies,
    b. ménager les découpes (7) dans la tôle (6) pour former des tronçons de ruban (12 à 16),
    c. ménager au moins une entaille (23, 24, 25, 26) dans la tôle (6), cette entaille (23, 24, 25, 26) étant ouverte à une extrémité (28), pour former des tronçons de tôle (29 à 35),
    d. déformer les tronçons de ruban (12 à 16) en arc de cercle,
    e. déformer les tronçons de tôle (29 à 35) adjacents à l'entaille (23, 24, 25, 26) ouverte à au moins une extrémité (28) de telle sorte que leurs extrémités libres (40) soient écartées les unes des autres.

2. Procédé selon la revendication 1, dans lequel les étapes a. à e. du traitement et en particulier les étapes a. à d. du traitement sont réalisées successivement ou essentiellement simultanément au moyen d'un outil.

**3.** Procédé selon les revendications 1 et 2, dans lequel les étapes a. à e. du procédé sont réalisées par découpe, cintrage et/ou estampage.

**4.** Procédé selon l'une des revendications 1 à 3, dans lequel plus d'une entaille (23, 24, 25, 26) ouverte à une extrémité (28) est prévue et dans lequel les entailles (23, 24, 25, 26) ouvertes à une extrémité (28) sont ouvertes à des extrémités (2, 4) différentes de la tôle (6).

**5.** Procédé selon l'une des revendications 1 à 4, dans lequel, lorsque l'on déforme au moins l'un des tronçons de tôle (29 à 35) ou tous les tronçons de tôle (29 à 35) adjacents à une entaille (23 à 26) ouverte à une extrémité, on forme une structure annulaire fermée (figures 7, 9), une structure qui forme des U orientés dans des sens opposés (figure 11) ou une structure courbe dont les courbes sont orientées en sens opposés (figure 13).

**6.** Procédé selon l'une des revendications 1 à 5, dans lequel les entailles (7, 23 à 26) sont découpées dans la tôle les unes derrière les autres et/ou les unes à côté des autres dans le sens de la longueur de la tôle (6).

**7.** Procédé selon l'une des revendications 1 à 6, dans lequel les entailles (7) qui sont disposées les unes à côté des autres dans le sens de la largeur de la tôle (6) présentent la même longueur à l'exception de l'entaille (23, 24, 25, 26) ouverte à son extrémité (28).

**8.** Procédé selon l'une des revendications 1 à 7, dans lequel deux entailles (23, 24 ; 25, 26) ouvertes à une extrémité (28) sont disposées dans le prolongement les unes des autres.

**9.** Procédé selon l'une des revendications 1 à 8, dans lequel les tronçons de ruban (12 à 16) sont dotés d'une profilation transversale par rapport au sens de leur longueur.

**10.** Corps de garnissage (41) fabriqué avec le procédé selon l'une des revendications 1 à 9, en particulier pour des colonnes d'échange de matière et/ou de chaleur traversées par un écoulement de gaz et/ou de liquide, le corps de garnissage (41) étant une unité de corps de garnissage formée par une superstructure constituée d'au moins deux parties (36, 37, 51) de corps de garnissage reliées l'une à l'autre, les parties (36, 37, 51) de corps de garnissage étant disposées les unes à côté des autres à différentes hauteurs.

**11.** Corps de garnissage selon la revendication 10, dans lequel le corps de garnissage (41) est formé de trois parties (36, 37, 51) de corps de garnissage et en particulier par trois parties (36, 37, 51) de corps de garnissage qui présentent une structure annulaire, les trois parties (36, 37, 51) de corps de garnissage étant disposées à différentes hauteurs.

**12.** Corps de garnissage selon les revendications 10 ou 11, dans lequel le rapport $\dfrac{H}{\Phi}$ du corps de garnissage (41) formé par les trois parties (36, 37, 51) du corps de garnissage est < 0,6, avec :

H = hauteur du corps de garnissage (41)

$$\Phi = \sqrt{\frac{L \cdot B}{\pi} 2}$$

L = longueur du corps de garnissage (41) et
B = largeur du corps de garnissage (41).

13. Corps de garnissage selon l'une des revendications 10 à 12, dans lequel les parties (36, 37, 51) voisines du corps de garnissage sont reliées les unes aux autres par une entretoise.

14. Corps de garnissage selon l'une des revendications 10 à 13, dans lequel les parties (36, 37, 51) du corps de garnissage présentent des parties cintrées vers l'extérieur, les parties du corps de garnissage étant reliées les unes aux autres dans ces zones.

Fig.1

Fig.2

Fig.3

Fig.4

Fig.5

Fig.6

Fig.7

Fig.8

Fig. 9

Fig. 10

Fig. 11

Fig. 12

Fig. 13

Fig. 14

Fig. 15

Fig. 16

Fig. 17

Fig. 18

Fig. 19

Fig. 20

**EP 1 731 220 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 853159 C
- EP 0143902 A1
- US 4575435 A
- DE 1129931 B
- US 4303599 A
- DE 29512080 U1
- EP 0764462 B1
- US 4041113 A
- US 4576763 A
- US 5411681 A
- EP 0697246 B1
- WO 0240148 A2
- DE 19715704 C2

**In der Beschreibung aufgeführte Nicht-Patentliteratur**

- *Chem Technol Biotechnol,* 2003, vol. 78, 142-145, www.paper.edu.cn